# FASCICULE DE BREVET EUROPEEN

(11) **EP 3 274 682 B1**
(45) Date de publication et mention de la délivrance du brevet: **07.10.2020**
(21) Numéro de dépôt: 16708184.3
(22) Date de dépôt: 07.03.2016
(51) Int. Cl.: G01M 3/20

(54) **DÉTECTEUR DE FUITES ET PROCÉDÉ DE DÉTECTION DE FUITES**
LECK DETEKTOR UND VERFAHREN ZUR LEACKAGE DETEKTION
LEAKS DETECTOR AND METHOD FOR DETECTING LEAKS

(30) Priorité: 23.03.2015 FR 1552371
(43) Date de publication de la demande: 31.01.2018
(73) Titulaire: Pfeiffer Vacuum, 74000 Annecy (FR)
(72) Inventeur: DUCIMETIERE, Laurent, 74320 Sevrier (FR); PUECH, Michel, 74370 Metz-tessy (FR); ROUVEYRE, Frédéric, 74650 Chavanod (FR)
(74) Mandataire: Croonenbroek, Thomas Jakob
(86) Numéro de dépôt international: PCT/EP2016/054808
(87) Numéro de publication internationale: WO 2016/150690

(56) Documents cités:
- US-A- 5 661 229
- US-A1- 2014 154 811

## Description

La présente invention concerne un détecteur de fuites pour contrôler l'étanchéité d'un objet à tester au moyen d'un gaz traceur. La présente invention concerne également un procédé de détection de fuites.

Une méthode connue pour contrôler l'étanchéité d'un objet consiste à réaliser un test par gaz traceur. Cette méthode fait appel à la détection du passage du gaz traceur à travers les éventuelles fuites de l'objet à tester.

Selon une première méthode, l'objet à tester est rempli avec le gaz traceur. Puis, on recherche à l'aide d'un détecteur de fuites la présence éventuelle du gaz traceur autour de l'objet. L'objet peut être placé dans une chambre de test étanche mise sous vide. Alternativement, la mesure peut s'effectuer à pression atmosphérique et dans ce cas, on utilise un détecteur de fuites dit « renifleur ».

Selon une autre méthode connue, dite « par aspersion », on fait le vide dans l'objet à tester et on crée une atmosphère enrichie de gaz traceur autour de l'objet à tester. L'intérieur de l'objet à tester est relié à un détecteur de fuites qui vérifie si du gaz traceur peut être retrouvé dans les gaz aspirés.

On utilise généralement l'hélium comme gaz traceur car il traverse les petites fuites plus aisément que les autres gaz, du fait de la petite taille de sa molécule.

On utilise également généralement, un spectromètre de masse pour détecter et identifier l'hélium dans le flux de gaz prélevé. Les molécules de gaz sont ionisées puis séparées en fonction de leur rapport masse/charge. Le courant ionique est collecté et converti en courant électrique. Cette méthode de détection est d'une grande sensibilité. Elle est habituellement utilisée pour la détection de fuites allant de 10⁻⁵ à 10⁻¹² Pa m³/s.

Toutefois, cette méthode présente un coût élevé. Le coût est notamment dû au besoin d'obtenir et de maintenir un vide secondaire par une pompe turbomoléculaire permettant le fonctionnement du spectromètre de masse. De plus, la pompe turbomoléculaire rend le détecteur de fuite encombrant et peu mobile. En effet, la très haute vitesse de rotation et l'inertie du rotor de la pompe turbomoléculaire font que l'utilisateur doit attendre un certain temps après avoir commandé l'arrêt de la pompe à vide secondaire pour que l'arrêt du rotor soit effectif et pour qu'il puisse déplacer le détecteur de fuites sans risquer de l'endommager. Un déplacement hâtif du système pourrait provoquer le grippage de la pompe à vide secondaire du fait de l'effet gyroscopique.

On connait également d'autres méthodes de détection de fuites n'utilisant ni pompage secondaire, ni spectromètre de masse.

Le document US 5,661,229 par exemple, divulgue un détecteur de fuites dont l'entrée se raccorde à une chambre de test. Une canalisation relie l'entrée à une pompe à vide. Les gaz à tester passent dans la canalisation où ils sont vus par un détecteur de gaz. Le détecteur de gaz comporte une membrane perméable au gaz de test. Cette membrane peut être en matériau polymère, en quartz ou en silice. La membrane de quartz ou de silice doit être chauffée entre 300 et 900°C pour être rendue perméable au gaz de test en ayant une vitesse de perméation satisfaisante. Cela nécessite l'implémentation et la gestion d'un dispositif de chauffage élaboré de la membrane, ce qui est complexe à réaliser, à contrôler et ce qui est consommateur d'énergie.

De même, une fois le contrôle d'étanchéité réalisé, il est nécessaire de chauffer la membrane pour évacuer le gaz de test piégé afin de pouvoir procéder à une nouvelle mesure sans que le gaz de test résiduel de la mesure précédente ne fausse une mesure ultérieure.

En outre, la diffusion du gaz de test à travers la membrane est une opération qui prend du temps, même lorsque la membrane est chauffée. De cela résulte un temps de réponse relativement long pour réaliser une mesure d'étanchéité.

Un des buts de la présente invention est de proposer un dispositif de détection de fuite robuste, peu volumineux, facile à manipuler, peu coûteux, peu consommateur d'énergie et présentant un temps de réponse plus court que les dispositifs de l'art antérieur.

A cet effet, l'invention a pour objet un détecteur de fuites pour la détection de fuites d'un objet à tester par détection d'un gaz traceur, le détecteur de fuites comprenant :
- une entrée des gaz,
- un dispositif de pompage,
- une canalisation de pompage raccordant l'entrée des gaz au dispositif de pompage,
- un dispositif de détection de gaz traceur monté sur la canalisation de pompage, en dérivation du dispositif de pompage, le dispositif de détection de gaz traceur comportant :
   - une sonde configurée pour ioniser les molécules de gaz et mesurer le courant des molécules de gaz ionisées, et
   - une membrane séparatrice agencée en amont de la sonde,
- caractérisé en ce que la membrane séparatrice est une couche monoatomique de graphène déposée sur un substrat perméable aux gaz du dispositif de détection de gaz traceur, des orifices de sélection dont la plus grande dimension est inférieure à 5 Angstrom étant ménagés dans la couche monoatomique de graphène de sorte que seules les molécules de gaz ayant des dimensions plus petites que les orifices de sélection puissent traverser la membrane séparatrice pour atteindre la sonde.

Ainsi perforée, la couche monoatomique de graphène devient mécaniquement perméable aux molécules passant par les orifices de sélection. Les dimensions des orifices de sélection permettent que seules les molécules du gaz traceur que l'on cherche à détecter dans l'objet à tester ou autour de l'objet à tester, passent à travers la membrane séparatrice. Le passage des molécules des autres gaz, tel que l'azote ou l'oxygène de l'air, est bloqué. La pression en aval de la membrane séparatrice est alors une basse pression de vide secondaire, c'est-à-dire un vide poussé par exemple comprise entre 10⁻³ et 10⁻⁷ mbars, tel qu'inférieur à 10⁻⁵ mbars. Ce vide secondaire permet le fonctionnement de la sonde ionisant les molécules de gaz.

L'épaisseur de la membrane séparatrice constituée par la couche monoatomique de graphène étant de l'ordre de quelques Angstrom, on diminue l'épaisseur d'un facteur 1 000 à 10 000 par rapport à l'épaisseur des membranes en polymère ou en silice de l'état de la technique. Le gaz traceur passe ainsi à travers la membrane séparatrice quasiment instantanément, de sorte que le temps de réponse est beaucoup plus rapide que celui des membranes de l'art antérieur.

La perméation de la membrane séparatrice formée par la couche monoatomique de graphène étant mécanique, celle-ci n'a pas besoin d'être chauffée pour autoriser le passage de l'hélium, ce qui est simple à mettre en place et est économe en énergie.

Selon une ou plusieurs caractéristiques du détecteur de fuites, prise seule ou en combinaison,
- la plus grande dimension des orifices de sélection est inférieure à 3 Angstrom,
- la densité des orifices de sélection est comprise entre 4.10¹⁵ et 4.10¹⁸ cm⁻²,
- la couche monoatomique de graphène présente une surface comprise entre 0, 5 et 2 cm²,
- le substrat perméable aux gaz comporte un matériau ayant des pores traversant, la plus petite dimension d'une section de pore traversant étant supérieure à 30 Angstrom,
- l'épaisseur du substrat perméable aux gaz est comprise entre 1 et 100 µm,
- la sonde comporte une jauge à ionisation ou une pompe ionique,
- le détecteur de fuites comporte une sonde de reniflage raccordée à l'entrée des gaz.

L'invention a aussi pour objet un procédé de détection de fuites pour la détection de fuites d'un objet à tester par détection d'un gaz traceur, au moyen d'un détecteur de fuites tel que décrit précédemment, dans lequel on met en communication :
- un flux de gaz circulant depuis une entrée des gaz vers un dispositif de pompage dont on cherche à détecter s'il contient du gaz traceur en cas de fuites de l'objet à tester, avec
- une membrane séparatrice de couche monoatomique de graphène déposée sur un substrat perméable aux gaz, la couche monoatomique de graphène étant percée d'orifices de sélection, laissant seulement passer les molécules de gaz dont les dimensions sont inférieures aux plus grandes dimensions des orifices de sélection de la couche monoatomique de graphène et bloque le passage des autres gaz.

Les gaz ayant traversé la membrane séparatrice peuvent être ensuite ionisés pour générer un courant représentatif du taux de fuites de l'objet à tester.

D'autres caractéristiques et avantages de l'invention ressortiront de la description suivante, donnée à titre d'exemple, sans caractère limitatif, en regard des dessins annexés sur lesquels:
- la figure 1 représente une vue schématique d'éléments d'un détecteur de fuites raccordé à un objet à tester illustrant un premier exemple de procédé de détection de fuites,
- la figure 2 est une vue analogue à la figure 1 sur laquelle le détecteur de fuites est raccordé à une enceinte étanche pour illustrer un deuxième exemple de procédé de détection de fuites,
- la figure 3 est une vue analogue à la figure 1 sur laquelle le détecteur de fuites comporte une sonde de reniflage pour illustrer un troisième exemple de procédé de détection de fuites,
- la figure 4 représente une vue schématique de face d'éléments du dispositif de détection de gaz traceur,
- la figure 5 est une vue de côté d'un détail de la membrane séparatrice et d'un substrat perméable aux gaz, et
- la figure 6 représente une vue schématique d'un détail de la couche monoatomique de graphène.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la suite de la description, on utilisera les termes « amont » et « aval » en référence à la direction d'écoulement des gaz dans le détecteur de fuites.

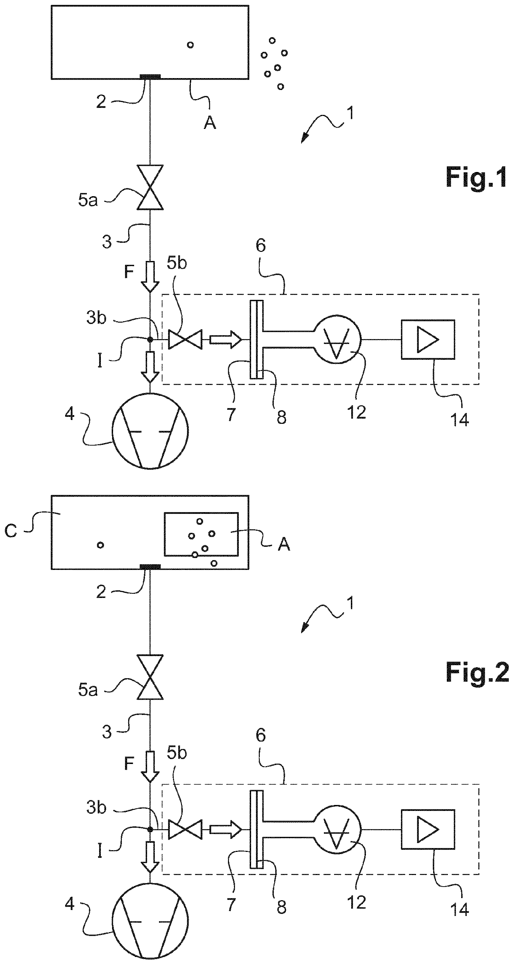

La figure 1 montre une représentation schématique d'un exemple de réalisation d'un détecteur de fuites 1 pour la détection de fuites d'un objet à tester A par détection d'un gaz traceur.

La détection de fuites d'un objet à tester A par détection d'un gaz traceur est réalisée en détectant le passage d'un gaz traceur à travers les éventuelles fuites de l'objet à tester A.

Selon une première méthode, dite « par aspersion », représentée sur la figure 1, on crée une atmosphère enrichie de gaz traceur autour de l'objet à tester A. L'intérieur de l'objet à tester A est relié au détecteur de fuites 1 qui vérifie si du gaz traceur peut être retrouvé dans l'objet A.

Selon une autre méthode représentée en figure 2, l'objet à tester A est rempli avec le gaz traceur et est placé dans une chambre de test étanche C mise sous vide. On recherche à l'aide du détecteur de fuites 1, la présence éventuelle du gaz traceur dans la chambre de test C.

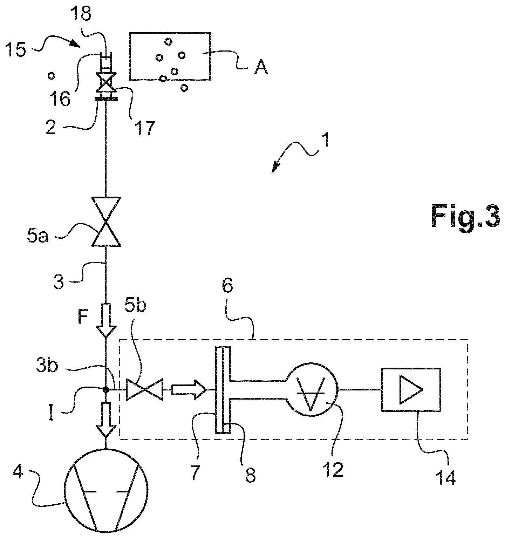

Selon une autre méthode représentée sur la figure 3, dite « de reniflage », le détecteur de fuites 1 est équipé d'une sonde de reniflage 15. L'objet à tester A est rempli en gaz traceur, généralement pressurisé, et on recherche la présence éventuelle du gaz traceur en baladant la sonde de reniflage 15 autour de l'objet à tester A.

On utilise généralement l'hélium ou l'hydrogène comme gaz traceur car ces gaz traversent les petites fuites plus aisément que les autres gaz, du fait de la petite taille de leur molécule.

Le détecteur de fuites 1 comporte une entrée des gaz 2, un dispositif de pompage 4, une canalisation de pompage 3 raccordant l'entrée des gaz 2 au dispositif de pompage 4 et un dispositif de détection de gaz traceur 6.

Comme évoqué précédemment, l'entrée des gaz 2 est destinée à être raccordée à un objet à tester A ou à une chambre de test C dans laquelle on a disposé l'objet à tester A ou à une sonde de reniflage 15.

La canalisation de pompage 3 raccorde fluidiquement l'entrée des gaz 2 au dispositif de pompage 4 de manière à faire circuler un flux de gaz F depuis l'entrée des gaz 2 vers le dispositif de pompage 4.

Dans la méthode de détection de fuites dite de reniflage illustrée sur la figure 3, l'entrée des gaz 2 du détecteur de fuites 1 est raccordée à une sonde de reniflage 15.

De manière connue en soi, la sonde de reniflage 15 comporte un conduit 16 débouchant sur l'atmosphère extérieure. Une conductance prédéfinie 17 et au moins un filtre 18 sont montés en série dans le conduit 16.

La conductance prédéfinie 17 est configurée pour limiter le flux de gaz aspiré par le dispositif de pompage 4. La conductance prédéfinie 17 est par exemple réalisée par un capillaire, un gicleur tel qu'un rubis percé, ou une membrane poreuse ou une aiguille.

Le filtre 18 filtre les poussières pouvant provenir de l'atmosphère extérieure, permettant ainsi d'éviter au conduit 16 de se colmater. On peut prévoit plusieurs filtres en série, en amont de la conductance prédéfinie 17, tel qu'un premier filtre en métal fritté pour les poussières comprises entre 10 et 20 µm et un deuxième filtre à base de fibres de feutre pour poussières plus fines par exemple comprises entre 5 et 10µm.

On prévoit en outre pour le détecteur de fuites 1 renifleur que la canalisation de pompage 3 soit flexible, afin de permettre à l'utilisateur la localisation des fuites.

Le dispositif de pompage 4 comporte par exemple une pompe à vide primaire, telle qu'une pompe à membrane, qui aspire les gaz et les refoule à la pression atmosphérique en sortie de la pompe à vide primaire. La pompe à vide primaire permet d'obtenir une basse pression de vide primaire c'est-à-dire un vide grossier de quelques millibars, par exemple comprise entre 1 et 1000 mbars, tel qu'inférieur à 10 mbars (ou 1000 Pa). Ce vide grossier est obtenu avec une pompe à vide primaire de faible encombrement, de faible coût du fait des petites vitesses de pompage requises, par exemple allant de 0,25 m³/h à 4,3 m³/h. Un dispositif de pompage 4 ne comportant qu'une unique petite pompe à membrane suffit pour un détecteur de fuites 1 renifleur.

Le dispositif de détection de gaz traceur 6 est monté sur la canalisation de pompage 3, en dérivation du dispositif de pompage 4, au niveau d'une intersection I de la canalisation de pompage 3.

Le détecteur de fuites 1 peut comporter une première vanne d'isolation 5a montée sur la canalisation de pompage 3 entre l'entrée des gaz 2 et la dérivation I. La première vanne d'isolation 5a permet d'isoler l'entrée des gaz 2 pour permettre par exemple de raccorder l'objet à tester A à l'entrée des gaz 2 du détecteur de fuites 1 tout en conservant le vide dans la canalisation de pompage 3 jusqu'en amont de la première vanne d'isolation 5a.

En alternative ou en complément de la première vanne d'isolation 5a, le détecteur de fuites 1 peut comporter une deuxième vanne d'isolation 5b montée sur une canalisation de dérivation 3b, après l'intersection I, en amont du dispositif de détection de gaz traceur 6. La deuxième vanne d'isolation 5b permet d'isoler le dispositif de détection de gaz traceur 6, notamment pour protéger ce dernier d'éventuelles pollutions à l'arrêt du détecteur de fuites 1, lorsque le dispositif de pompage 4 est arrêté.

Le dispositif de détection de gaz traceur 6 comporte une sonde 12 et une membrane séparatrice 8 agencée en amont de la sonde 12 dans le sens d'écoulement des gaz. Le dispositif de détection de gaz traceur 6 ne présente pas de sortie des gaz, il est fermé à une extrémité en « cul-de-sac ».

La membrane séparatrice 8 est par exemple agencée dans un raccord de canalisation 7 cylindrique pouvant être raccordé en dérivation de la canalisation de pompage 3. Lorsque le détecteur de fuites 1 comporte une deuxième vanne d'isolation 5b, le raccord de canalisation 7 peut être raccordé sur une canalisation de dérivation 3b en aval de la deuxième vanne d'isolation 5b.

La membrane séparatrice 8 peut ainsi être mise en présence des gaz aspirés par le dispositif de pompage 4 dans la canalisation de pompage 3 lorsque la deuxième vanne d'isolation 5b est ouverte.

La section de passage des gaz est étanche autour de la membrane séparatrice 8 de sorte que seul le gaz pouvant passer à travers la membrane séparatrice 8 peut atteindre la sonde 12.

La sonde 12 est configurée pour ioniser les molécules de gaz et mesurer le courant ionique des molécules de gaz ionisées, en le convertissant en courant électrique. Comme on le verra plus loin, pour cela, la sonde 12 comporte par exemple une jauge à ionisation ou une pompe ionique.

Le courant électrique est représentatif de la quantité de molécules ionisées de la sonde 12. Il peut être traité/amplifié/affiché par un dispositif d'affichage et/ou de traitement du signal 14.

On prévoit en outre que la membrane séparatrice 8 soit montée directement sur la sonde 12 de manière que le volume entre la sonde 12 et la membrane séparatrice 8 soit le plus petit possible.

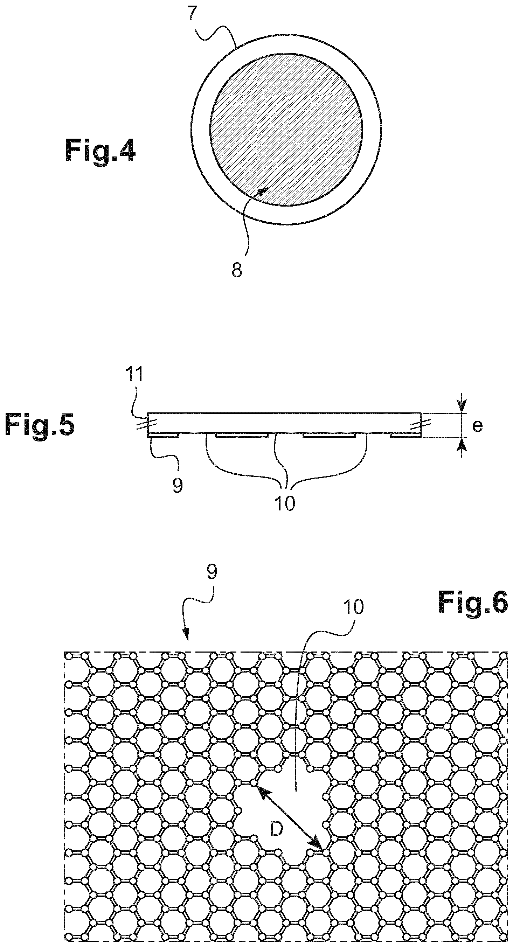

Mieux visible sur les figures 4 à 6, la membrane séparatrice 8 est une couche monoatomique de graphène 9 dans laquelle une pluralité d'orifices de sélection 10 est ménagée.

Le graphène est un cristal bidimensionnel (c'est-à-dire monoplan) de carbone dont la formule brute est (C)n et le système cristallin est Hexagonal plan, comme visible sur la figure 6. Le graphène est donc constitué d'une couche monoatomique de carbone. L'épaisseur de la couche monoatomique de graphène 9 est donc de l'ordre de quelques Angstrom, tel que 5 ou 6 Angstrom.

Le graphène est un élément étanche aux principaux gaz.

La plus grande dimension D d'un orifice de sélection 10 est inférieure à 5 Angstrom, telle qu'inférieure à 3 Angstrom, de sorte que seules les molécules de gaz ayant des dimensions plus petites que les orifices de sélection 10 puissent passer au travers de la membrane séparatrice 8 pour atteindre la sonde 12.

La plus grande dimension D de l'orifice de sélection 10 est comprise dans le plan de la couche monoatomique de graphène 9 et peut être désigné par le diamètre de l'orifice de sélection 10 sensiblement en forme de disque (figure 6).

Le gaz traceur étant généralement un gaz dont les atomes ou les molécules sont de très petite dimension, tel que l'hélium ou l'hydrogène, seules les molécules du gaz traceur peuvent ainsi atteindre la sonde 12.

Ainsi perforée, la couche monoatomique de graphène 9 devient mécaniquement perméable aux molécules passant par les orifices de sélection 10. Les dimensions des orifices de sélection 10 permettent que seules les molécules du gaz traceur que l'on cherche à détecter dans l'objet à tester A ou dans la chambre de test étanche C ou autour de l'objet à tester, passent à travers la membrane séparatrice 8. Le passage des molécules des autres gaz, tel que l'azote ou l'oxygène de l'air, est bloqué. La pression en aval de la membrane séparatrice 8 est alors une basse pression de vide secondaire, c'est-à-dire un vide poussé par exemple comprise entre 10⁻³ et 10⁻⁷ mbars, tel qu'inférieur à 10⁻⁵ mbars. Ce vide secondaire permet le fonctionnement de la sonde 12 ionisant les molécules de gaz.

L'épaisseur de la membrane séparatrice 8 constituée par la couche monoatomique de graphène 9 étant de l'ordre de quelques Angstrom, on diminue l'épaisseur d'un facteur 1 000 à 10 000 par rapport à l'épaisseur des membranes en polymère ou en silice de l'état de la technique. Le gaz traceur passe ainsi à travers la membrane séparatrice 8 quasiment instantanément, de sorte que le temps de réponse est beaucoup plus rapide que celui des membranes de l'art antérieur.

La perméation de la membrane séparatrice 8 formée par la couche monoatomique de graphène 9 étant mécanique, celle-ci n'a pas besoin d'être chauffée pour autoriser le passage de l'hélium, ce qui est simple à mettre en place et est économe en énergie.

Les orifices de sélection 10 sont par exemple créés par FIB pour « Focus Ion Beam » en anglais.

La densité des orifices de sélection 10 est par exemple comprise entre 4.10¹⁵ cm⁻²et 4.10¹⁸ cm⁻².

Par exemple, les orifices de sélection 10 sont réalisés dans la couche monoatomique de graphène 9 au moyen d'un faisceau d'ions Galium permettant d'obtenir une densité comprise entre 4.10¹⁵ cm⁻² et 2.10¹⁶ cm⁻² ou au moyen d'un faisceau d'ions Hélium permettant d'obtenir une densité comprise entre 5.10¹⁷ cm⁻² et 4.10¹⁸ cm⁻².

Ces orifices de sélection 10 sont par exemple uniformément répartis dans la couche monoatomique de graphène 9.

Ces techniques de fabrication permettent de maitriser les dimensions et la densité des orifices de sélection 10 créés dans la couche monoatomique de graphène 9, ce qui permet de contrôler la sensibilité de mesure du dispositif de détection de gaz traceur 6.

On prévoit en outre que le dispositif de détection de gaz traceur 6 comporte un substrat perméable aux gaz 11 pour supporter la couche monoatomique de graphène 9.

Le substrat perméable aux gaz 11 est non sélectif car il laisse passer la majorité des espèces gazeuses sans sélection.

Pour cela, le substrat perméable aux gaz 11 comporte un matériau ayant des pores traversant de grosses dimensions par rapport aux dimensions des orifices de sélection 10, le rendant non sélectif aux gaz. La plus petite dimension d'une section de pore traversant peut être supérieure à 30 Angstrom, telle que supérieure à 40 Angstrom et peut être inférieure à 200 Angstrom.

La couche monoatomique de graphène 9 est déposée sur le substrat perméable aux gaz 11 par exemple par un procédé de dépôt CVD (pour « Chemical Vapor Déposition » en anglais ou « dépôt chimique en phase vapeur »).

La couche monoatomique de graphène 9 déposée sur le substrat perméable aux gaz 11 permet que le dispositif de détection de gaz traceur 6 puisse être placé sous vide sans rupture ou endommagements de la couche monoatomique de graphène 9. En effet, pour pouvoir détecter une fuite, la taille et de la densité des orifices de sélection 10 sont dimensionnés pour ne laisser passer qu'un infime flux de gaz de traceur, ce qui a aussi pour effet de créer une importante différence de pression de part et d'autre de la couche monoatomique de graphène 9. La pression en amont de la couche 9 peut être une pression de vide primaire tandis qu'en aval, la pression peut être une pression de vide secondaire. La couche monoatomique de graphène 9 déposée sur le substrat perméable aux gaz 11 permet d'apporter la rigidité nécessaire à la couche monoatomique de graphène 9 pour que celle-ci puisse être maintenue uniformément et sans déformations sur toute sa surface, malgré cet important écart de pression.

Le substrat perméable aux gaz 11 est par exemple agencé au dos de la couche monoatomique de graphène 9, en aval de la couche monoatomique de graphène 9. Il est ainsi situé entre la couche monoatomique de graphène 9 et la sonde 12 dans le sens d'écoulement des gaz de sorte que tout le gaz susceptible de traverser le substrat perméable aux gaz 11 traverse d'abord la couche monoatomique de graphène 9.

A l'inverse, le substrat perméable aux gaz 11 peut être agencé frontalement, en amont de la couche monoatomique de graphène 9. Le flux de gaz traverse alors d'abord le substrat perméable aux gaz 11 avant d'atteindre la couche monoatomique de graphène 9. Le substrat perméable aux gaz 11 peut alors jouer un rôle de filtre à particules, empêchant les volumineuses particules liquides ou solides de passer à travers les pores du substrat perméable aux gaz 11, même lorsque le substrat perméable aux gaz 11 présente des sections de pore traversant de l'ordre de 200 Angstrom. On évite ainsi de polluer la couche monoatomique de graphène 9 par des contaminants solides ou liquides, tels que l'eau ou des contaminants organiques.

Le substrat perméable aux gaz 11 comporte par exemple une céramique poreuse ou un matériau poreux à base de silice. Le substrat perméable aux gaz 11 peut être du verre, tel que le Vycor ® comprenant environ 96% de silice et 4% d'anhydride borique. Ces matériaux permettent que le substrat perméable aux gaz 11 puisse être réalisé avec une faible épaisseur e, telle que comprise entre 1 et 100 µm, ce qui permet de réduire le temps de réponse par mesure.

Le substrat perméable aux gaz 11 ne piège pas les molécules de gaz traceur dans ses pores lorsque qu'il traverse la membrane séparatrice 8. Le gaz traceur peut ainsi facilement traverser le substrat perméable aux gaz 11 pour atteindre la membrane séparatrice 8 et peut être facilement évacué du substrat perméable aux gaz 11 une fois la mesure effectuée.

La couche monoatomique de graphène 9 et le substrat perméable aux gaz 11, peuvent présenter une forme quelconque, telle qu'une forme de disque ou une forme rectangulaire.

La couche monoatomique de graphène 9 présente par exemple une surface comprise entre 0,5 et 2 cm², telle que de l'ordre de 1 cm², la couche monoatomique de graphène 9 recouvrant nécessairement entièrement la surface du substrat perméable aux gaz 11 pour que le gaz porteur puisse être séparé du flux de gaz F par la couche monoatomique de graphène 9.

Selon un exemple de réalisation, la sonde 12 comporte une jauge à ionisation (ou manomètre à ionisation), comme une jauge à ionisation à cathode froide telle qu'une jauge Penning ou comme une jauge à ionisation à cathode chaude.

De manière connue en soi, la jauge à ionisation à cathode froide comporte deux électrodes distantes l'une de l'autre, entre lesquelles on applique une différence de potentiel de l'ordre de plusieurs milliers de volt. Le gaz entre les électrodes s'ionise et une fraction atteint l'anode où il reste fixé en créant un courant électrique. La jauge à ionisation peut comporter un dispositif de génération de champ magnétique pour guider les ions. La mesure du courant de ionisation est ainsi représentative du gaz ayant traversé la membrane séparatrice 8.

La jauge à ionisation à cathode chaude ou « jauge triode » comporte trois électrodes, formant une triode dont la cathode est un filament incandescent. Les trois électrodes forment un collecteur d'ions, un filament et une grille accélératrice. En fonctionnement, le filament porté à haute température émet des électrons qui oscillent autour de la grille et finissent par s'y accumuler. Au cours de ces oscillations, quelques électrons entrent en collision avec des molécules gazeuses et les ionisent. Le nombre d'ions est proportionnel à la densité des molécules gazeuses et au courant d'électrons émis par le filament. Ces ions s'accumulent sur le collecteur pour former un courant ionique. Ce courant est proportionnel à la densité des molécules gazeuses, donc à la pression.

Selon un autre exemple, la sonde 12 comporte une pompe ionique.

Le principe de la pompe ionique est le même que la jauge à ionisation. Comme la jauge à ionisation, la pompe ionique ionise les molécules de gaz qui sont ensuite fixées par une surface de la pompe par l'action de champs électriques combinés ou non à un champ magnétique. La mesure du courant ionique est représentative de la quantité de gaz. La pompe ionique est une pompe à fixation qui peut être à sorbeur (getter), à sublimation, à pulvérisation, ou une combinaison de ces principes.

On comprend que la sonde 12 permettant d'ioniser les gaz ayant traversé la membrane séparatrice 8 pour quantifier un courant ionique représentatif du gaz traceur retrouvé dans l'objet à tester A ou la chambre de test étanche C ou dans l'atmosphère environnant l'objet à tester A, est fiable, peu couteux, simple à mettre en oeuvre et robuste.

Nous allons maintenant décrire le procédé de détection de fuites pour la détection de fuites d'un objet à tester A par détection d'un gaz traceur, au moyen du détecteur de fuites 1.

Les première et deuxième vannes d'isolation 5a, 5b sont ouvertes et le dispositif de pompage 4 est en marche. La canalisation de pompage 3 et la canalisation de dérivation 3b sont sous une basse pression de vide primaire.

Selon une première méthode, dite « par aspersion », représentée sur la figure 1, l'objet à tester A est raccordé à l'entrée des gaz 2 du détecteur de fuites 1, plaçant l'atmosphère interne de l'objet à tester A sous une basse pression de vide primaire. On asperge l'objet à tester A d'un gaz traceur, tel que l'hélium ou l'hydrogène.

Selon une deuxième méthode représentée sur la figure 2, l'objet à tester A est rempli avec le gaz traceur et placé dans une chambre de test étanche C raccordée à l'entrée des gaz 2 du détecteur de fuites 1, plaçant l'atmosphère interne de la chambre de test étanche C sous une basse pression de vide primaire.

Selon une troisième méthode représentée sur la figure 3, la sonde de reniflage 15 est raccordée à l'entrée des gaz 2 du détecteur de fuites 1. L'objet à tester A est rempli avec le gaz traceur et placé à proximité de l'extrémité du conduit 16 de la sonde de reniflage 15.

Dans ces trois cas, un flux de gaz F contenant du gaz traceur en cas de fuites de l'objet à tester A, circule ainsi depuis l'entrée des gaz 2 vers le dispositif de pompage 4.

Le flux de gaz F s'écoulant dans la canalisation de pompage 3 est en communication fluidique avec la membrane séparatrice 8.

La couche monoatomique de graphène 9 percée, laisse seulement passer les molécules de gaz traceur dont les dimensions sont inférieures aux plus grandes dimensions D des orifices de sélection 10 de la couche monoatomique de graphène 9 et bloque le passage des autres gaz, tel que l'azote ou l'oxygène de l'air, qui s'évacuent dans la canalisation de pompage 3, vers le dispositif de pompage 4.

Les gaz ayant traversé la membrane séparatrice 8 sont ionisés pour générer un courant représentatif du taux de fuites de l'objet à tester A, et donc du taux de fuites de l'objet à tester A. Le courant peut être amplifié, traité et/ou affiché par un dispositif d'affichage et/ou de traitement du signal 14. Ce signal permet ainsi de détecter une fuite et de quantifier le taux de fuites de l'objet à tester A, avec une bonne sensibilité de détection, telle qu'inférieure à 10⁻⁵mbar.l/s, voire 10⁻⁷mbar.l/s.

Le détecteur de fuites 1 est donc simple, économique, léger, facile à entretenir et robuste aux chocs ou à l'atmosphère environnante parce qu'il ne nécessite pas la mise en oeuvre d'un vide poussé par un pompage à vide secondaire de type turbomoléculaire.

En outre, il n'a pas besoin d'être alimenté ou chauffé, il est donc très peu consommateur d'énergie.

Il permet en outre d'obtenir une mesure avec un temps de réaction très court et sans délai d'attente entre deux mesures successives étant donné que la membrane séparatrice 8 présente une grande vitesse de perméation.

## Revendications

1. Détecteur de fuites (1) pour la détection de fuites d'un objet à tester (A) par détection d'un gaz traceur, le détecteur de fuites (1) comprenant :
- une entrée des gaz (2),
- un dispositif de pompage (4),
- une canalisation de pompage (3) raccordant l'entrée des gaz (2) au dispositif de pompage (4),
- un dispositif de détection de gaz traceur (6) monté sur la canalisation de pompage (3), en dérivation du dispositif de pompage (4), le dispositif de détection de gaz traceur (6) comportant :
• une sonde (12) configurée pour ioniser les molécules de gaz et mesurer le courant des molécules de gaz ionisées, et
• une membrane séparatrice (8) agencée en amont de la sonde (12),
- **caractérisé en ce que** la membrane séparatrice (8) est une couche monoatomique de graphène (9) déposée sur un substrat perméable aux gaz (11) du dispositif de détection de gaz traceur (6), des orifices de sélection (10) dont la plus grande dimension (D) est inférieure à 5 Angstrom étant ménagés dans la couche monoatomique de graphène (9) de sorte que seules les molécules de gaz ayant des dimensions plus petites que les orifices de sélection (10) puissent traverser la membrane séparatrice (8) pour atteindre la sonde (12).

2. Détecteur de fuites (1) selon la revendication précédente, **caractérisé en ce que** la plus grande dimension (D) des orifices de sélection (10) est inférieure à 3 Angstrom.

3. Détecteur de fuites (1) selon l'une des revendications précédentes, **caractérisé en ce que** la densité des orifices de sélection (10) est comprise entre 4.10¹⁵ et 4.10¹⁸ cm⁻².

4. Détecteur de fuites (1) selon l'une des revendications précédentes, **caractérisé en ce que** la couche monoatomique de graphène (9) présente une surface comprise entre 0, 5 et 2 cm².

5. Détecteur de fuites (1) selon l'une des revendications précédentes, **caractérisé en ce que** le substrat perméable aux gaz (11) comporte un matériau ayant des pores traversant, la plus petite dimension d'une section de pore traversant étant supérieure à 30 Angstrom.

6. Détecteur de fuites (1) selon l'une des revendications précédentes, **caractérisé en ce que** l'épaisseur (e) du substrat perméable aux gaz (11) est comprise entre 1 et 100 µm.

7. Détecteur de fuites (1) selon l'une des revendications précédentes, **caractérisé en ce que** la sonde (12) comporte une jauge à ionisation ou une pompe ionique.

8. Détecteur de fuites (1) selon l'une des revendications précédentes, **caractérisé en ce qu'**il comporte une sonde de reniflage (15) raccordée à l'entrée des gaz (2).

9. Procédé de détection de fuites pour la détection de fuites d'un objet à tester (A) par détection d'un gaz traceur, au moyen d'un détecteur de fuites (1) selon l'une des revendications précédentes, dans lequel on met en communication :
- un flux de gaz (F) circulant depuis une entrée des gaz (2) vers un dispositif de pompage (4) dont on cherche à détecter s'il contient du gaz traceur en cas de fuites de l'objet à tester (A), avec
- une membrane séparatrice (8) de couche monoatomique de graphène (9) déposée sur un substrat perméable aux gaz (11), la couche monoatomique de graphène (9) étant percée d'orifices de sélection (10), laissant seulement passer les molécules de gaz dont les dimensions sont inférieures aux plus grandes dimensions (D) des orifices de sélection (10) de la couche monoatomique de graphène (9) et bloque le passage des autres gaz.

10. Procédé de détection de fuites selon la revendication précédente, **caractérisé en ce que** les gaz ayant traversé la membrane séparatrice (8) sont ensuite ionisés pour générer un courant représentatif du taux de fuites de l'objet à tester (A).

## Patentansprüche

1. Leckdetektor (1) zum Erkennen von Lecks an einem zu prüfenden Objekt (A) durch Erkennen eines Prüfgases, wobei der Leckdetektor (1) Folgendes aufweist:
- einen Gaseinlass (2),
- eine Pumpvorrichtung (4),
- eine Pumpleitung (3), die den Gaseinlass (2) mit der Pumpvorrichtung (4) verbindet,
- eine Vorrichtung zum Erkennen von Prüfgas (6), die in einem Abzweig der Pumpvorrichtung (4) an der Pumpleitung (3) angebracht ist, wobei die Vorrichtung zum Erkennen von Prüfgas (6) Folgendes aufweist:
• eine Sonde (12), ausgebildet zum Ionisieren der Gasmoleküle und zum Messen des Stroms der ionisierten Gasmoleküle, und
• eine Trennmembran (8), die vor der Sonde (12) angeordnet ist,
- **dadurch gekennzeichnet, dass** die Trennmembran (8) eine einatomige Graphenschicht (9) ist, die auf einem gasdurchlässigen Substrat (11) der Vorrichtung zum Erkennen von Prüfgas (6) aufgetragen ist, wobei die Auswahlöffnungen (10), deren größte Abmessung (D) weniger als 5 Angström beträgt, in der einatomigen Graphenschicht (9) in der Art angeordnet ist, dass nur die Gasmoleküle mit Abmessungen, die kleiner als die Auswahlöffnungen (10) sind, durch die Trennmembran (8) gelangen können, um die Sonde (12) zu erreichen.

2. Leckdetektor (1) nach dem vorhergehenden Anspruch, **dadurch gekennzeichnet, dass** die größte Abmessung (D) der Auswahlöffnungen (10) weniger als 3 Angström beträgt.

3. Leckdetektor (1) nach einem der vorhergehenden Ansprüche, **dadurch gekennzeichnet, dass** die Dichte der Auswahlöffnungen (10) zwischen 4 x 10¹⁵ und 4 x 10¹⁸ cm⁻² liegt.

4. Leckdetektor (1) nach einem der vorhergehenden Ansprüche, **dadurch gekennzeichnet, dass** die einatomige Graphenschicht (9) eine Oberfläche zwischen 0,5 und 2 cm² aufweist.

5. Leckdetektor (1) nach einem der vorhergehenden Ansprüche, **dadurch gekennzeichnet, dass** das gasdurchlässige Substrat (11) ein Material mit durchgehenden Poren aufweist, wobei die kleinste Abmessung eines Abschnitts einer durchgehenden Pore größer als 30 Angstrom ist.

6. Leckdetektor (1) nach einem der vorhergehenden Ansprüche, **dadurch gekennzeichnet, dass** die Dicke (e) des gasdurchlässigen Substrats (11) zwischen 1 und 100 µm liegt.

7. Leckdetektor (1) nach einem der vorhergehenden Ansprüche, **dadurch gekennzeichnet, dass** die Sonde (12) ein Ionisationsmessgerät oder eine Ionenpumpe aufweist.

8. Leckdetektor (1) nach einem der vorhergehenden Ansprüche, **dadurch gekennzeichnet, dass** er eine Schnüffelsonde (15) aufweist, die mit dem Gaseinlass (2) verbunden ist.

9. Verfahren zur Erkennung von Lecks zum Erkennen von Lecks an einem zu prüfenden Objekt (A) durch Erkennen eines Prüfgases mithilfe eines Leckdetektors (1) nach einem der vorhergehenden Ansprüche, wobei Folgendes miteinander verbunden wird:
- ein Gasstrom (F), der von einem Gaseinlass (2) zu einer Pumpvorrichtung (4) strömt, und für den erkannt werden soll, ob er Prüfgas enthält, falls das zu prüfenden Objekt (A) ein Leck aufweist, mit
- einer Trennmembran (8) aus einer einatomige Graphenschicht (9), die auf einem gasdurchlässigen Substrat (11) aufgetragen ist, wobei die einatomige Graphenschicht (9) von Auswahlöffnungen (10) durchbohrt ist, die nur Gasmoleküle passieren lassen, deren Abmessungen kleiner als die größten Abmessungen (D) der Auswahlöffnungen (10) der einatomigen Graphenschicht (9) sind, und den Durchtritt der anderen Gase blockieren.

10. Verfahren zur Erkennung von Lecks nach dem vorhergehenden Anspruch, **dadurch gekennzeichnet, dass** die Gase, die durch die Trennmembran (8) gelangt sind, anschließend ionisiert werden, um einen Strom zu erzeugen, der für die Leckrate des zu prüfenden Objekts (A) repräsentativ ist.

## Claims

1. Leak detector (1) for detecting leaks in an object to be tested (A) by detecting a tracer gas, the leak detector (1) comprising:
- a gas inlet (2),
- a pumping device (4),
- a pumping duct (3) connecting the gas inlet (2) to the pumping device (4),
- a tracer gas detection device (6) mounted on the pumping duct (3), bypassing the pumping device (4), the tracer gas detection device (6) comprising:
• a probe (12) configured to ionize the gas molecules and measure the current of ionized gas molecules, and
• a separating membrane (8) arranged upstream of the probe (12),
- **characterized in that** the separating membrane (8) is a monatomic graphene layer (9) deposited on a gas-permeable substrate (11) of the tracer gas detection device (6), selection orifices (10) having a largest dimension (D) of less than 5 Å being created in the monatomic graphene layer (9) such that only gas molecules having dimensions smaller than the selection orifices (10) can pass through the separating membrane (8) to reach the probe (12).

2. Leak detector (1) according to the preceding claim, **characterized in that** the largest dimension (D) of the selection orifices (10) is less than 3 Å.

3. Leak detector (1) according to either of the preceding claims, **characterized in that** the density of the selection orifices is between 4x10¹⁵ and 4x10¹⁵ cm⁻².

4. Leak detector (1) according to one of the preceding claims, **characterized in that** the monatomic graphene layer (9) has a surface area of between 0.5 and 2 cm².

5. Leak detector (1) according to one of the preceding claims, **characterized in that** the gas-permeable substrate (11) comprises a material having through-pores, the smallest dimension of a cross section of a through-pore being greater than 30 Å.

6. Leak detector (1) according to one of the preceding claims, **characterized in that** the thickness (e) of the gas-permeable substrate (11) is between 1 and 100 µm.

7. Leak detector (1) according to one of the preceding claims, **characterized in that** the probe (12) comprises an ionization gauge or an ionic pump.

8. Leak detector (1) according to one of the preceding claims, **characterized in that** it comprises a sniffer probe (15) connected to the gas inlet (2).

9. Leak detection method for detecting leaks in an object to be tested (A) by detecting a tracer gas, using a leak detector (1) according to one of the preceding claims, in which method the following are placed in communication:
- a flow of gas (F) flowing from a gas inlet (2) to a pumping device (4), which flow is investigated to detect any tracer gas in the event of leaks in the object to be tested (A), with
- a separating membrane (8) which is a monatomic graphene layer (9) deposited on a gas-permeable substrate (11), the monatomic graphene layer (9) having created in it selection orifices (10) that allow through only those gas molecules having dimensions smaller than the largest dimensions of the selection orifices (10) of the monatomic graphene layer (9), and prevents other gases from passing through.

10. Leak detection method according to the preceding claim, **characterized in that** the gases that have passed through the separating membrane (8) are then ionized to generate a current that is representative of the level of leaks in the object to be tested (A).
